# EUROPEAN PATENT APPLICATION

(11) **EP 1 439 138 A1**
(43) Date of publication of application: **21.07.2004**
(21) Application number: 03079117.2
(22) Date of filing: 18.12.2003
(51) Int. Cl.: B65G 15/60

(54) **Roller conveyor with endless conveying belt**

(30) Priority: 20.12.2002 NL 1022238
(71) Applicant: E. van Zanten Holding B.V., 2672 DN Naaldwijk (NL)
(72) Inventor: Van Zanten, Evert, 2672 DN Naaldwijk (NL)
(74) Representative: van Westenbrugge, Andries

(57) **Abstract**

The present invention relates to a transport system comprising a roller track (2) having a multiplicity of rollers located alongside one another, defining a transport surface, wherein the transport system further comprises at least one endless conveyor belt (1) and a drive for driving the endless conveyor belt (1), wherein the upper part of the conveyor belt (1) rests on the roller track (2) and wherein the lower part of the conveyor belt (1) runs below the roller track (2) and wherein the width of the conveyor belt (1) is less than the effective axial length (L) of the rollers of the roller track (2). The invention furthermore relates to the transport of plants and/or substrate containers, wherein the plants and/or plant containers and/or substrate containers are placed on the conveyor belts of the transport system and wherein the plants and/or plant containers and/or substrate containers are moved over the roller track and supported by the roller track by driving the at least one endless conveyor belt.

## Description

The present invention relates to a transport system consisting of a roller track having rollers located alongside one another that determine a transport surface and a conveyor belt.

Transport via roller tracks is widely known in the state of the art. With this technique the transport of products takes place either by manually moving the latter over the roller track or by the direct driving of one or more rollers of the roller track which propel the products forwards. In the latter case the drive is fairly involved and when several rollers are driven the drive mechanism takes up a large amount of space. Furthermore, the directly driven rollers are susceptible to wear, especially when heavy products are transported. In the first case an obvious disadvantage is that the products are not transported fully automatically.

Furthermore, in the case of transport on a roller track it is generally difficult to transport products in a controlled manner over a certain gradient, both when this is a positive gradient and when it is a negative gradient, i.e. relates to an upward slope or downward slope.

In horticulture an additional factor here, is, in particular, that the sand, substrate residues and plant residues that are present in large amounts here severely exacerbate wear of the roller track, which in the main is reflected in impairment of the correct rotation of the rollers. Rotation is then often jerky.

A transport system according to the precharacterising clause of Claim 1 is disclosed in US 5 348 140. This publication discloses a roller conveyor where the rollers are driven by a toothed drive belt. The toothed drive belt is sunk into the rollers and thus below the transport surface determined by the rollers. To prevent slip between the rollers and the toothed drive belt the rollers are correspondingly toothed where the belt is recessed. The disadvantage of this construction is that all rollers are driven directly, which makes the bearings thereof susceptible to wear. This is the case in particular in a horticultural environment where sand and other plant residues can easily penetrate into the bearings.

It is also pointed out that DE 2 013 847 discloses a transport system with a conveyor belt supporting the articles to be transported. Here the conveyor belt bears on rollers which essentially do not support the articles to be transported. Here the rollers themselves have no transport function. As a result of mounting on eccentric bearings, the rollers do periodically make contact with the articles to be transported. Here mounting on eccentric bearings deliberately has the consequence that the articles are periodically lifted from the conveyor belt to keep the articles still with respect to the circulating conveyor belt.

Furthermore, it is pointed out that an accumulator system with which the goods are transported with the aid of a roller conveyor is disclosed in US 3 791 510. The rollers are driven by a drive belt that is completely sunk into the rollers and is thus below the transport surface determined by the rollers. In order to make goods that have become stuck move smoothly, the drive belt is provided with a projection that when travelling along the upper part protrudes above the transport surface of the roller track so as to be able to push against the goods to ensure that these move smoothly.

The aim of the present invention is to provide a transport system that largely overcomes the abovementioned disadvantages. A further aim is to provide a transport system that requires little maintenance and offers additional flexibility with regard to the permissible dimensions of the individual moving parts and the products to be transported.

According to the invention the abovementioned aims are achieved by providing a transport system comprising:
- a roller conveyor having a multiplicity of rollers located alongside one another, determining a transport surface;
- an endless belt, the upper part of which rests on the roller conveyor and the lower part of which runs below the roller conveyor;
- a drive for driving the endless belt
wherein the width of the belt is less than the effective axial length of the rollers of the roller conveyor, characterised in that the endless belt is a conveyor belt that, protruding above the rollers, rests freely on the transport surface of the roller conveyor and in that the roller conveyor is so constructed that the rollers and conveyor belt jointly transport loads resting thereon.

The advantage of such a system is that driving of the conveyor belt can, for example, be effected by the use of a drive roller and at least two support or tensioning rollers, which are provided below the roller track. The drive system concerned here is a drive system that is generally known to be robust and to require low maintenance and that takes up relatively little space. Such a drive is much simpler than a drive that drives all rollers. Rollers that create friction as a consequence of wear and do not rotate well are bridged by the belt, so that the load that is on the latter continues to move in the normal manner.

Because the width of the conveyor belt is less than the axial length of the rollers of the roller track, the width of the belt is less critical compared with a situation where the belt has to be exactly the same as the axial length of the rollers. Conversely, this, of course, also applies in respect of the axial length of the rollers themselves with respect to the width of the conveyor belt.

According to an advantageous embodiment the drive engages on the lower part of the conveyor belt. The advantage of this is that the drive system can be installed in its entirety below the roller track, so that it only takes up space that is otherwise not very practical for other uses.

According to a further advantageous embodiment, the width of the conveyor belt is less than 50 %, in particular less than 25 %, of the effective axial length of the rollers of the roller track, more particularly less than 10 % of the effective axial length of the rollers of the roller track. In addition to the abovementioned flexibility in respect of the ratio between the width of the conveyor belt and the axial length of the rollers, here it is furthermore advantageous that relatively narrow conveyor belts can be used and thus also relatively small drive rollers. As a result of lower friction between conveyor belt and rollers, the drive will consume less energy than when a conveyor belt with the same width as the axial length of the rollers of the roller track is used. The smaller size of the drive rollers and also the tensioning rollers furthermore also presents a spatial advantage. Where there is a load on the conveyor belt the rollers will also turn as a result of friction between the conveyor belt and the load and contact between the rollers and the load and where the conveyor belt does not support a load the rollers will slip, or at least be able to slip, relative to the belt without much generation of heat. The rollers will thus be able to remain at a standstill where the conveyor belt is not supporting a load.

According to a further aspect, the present invention relates to a transport system wherein two conveyor belts are provided. Because, as stated above, according to the invention the width of the conveyor belt is less than the effective axial length of the rollers of the roller track, such as, for example, 10 % of this length, such an embodiment can easily be implemented. A major advantage here is that if the two conveyor belts are driven independently of one another two individual transport flows can be achieved over the same roller track. This can be an advantage if these flows have to be transported at different speeds or if two types of products have to be transported separately.

According to yet a further aspect, the transport system according to the invention can be used highly advantageously when transporting plants and/or substrate containers. In this case the plants and/or plant containers and/or substrate containers are placed on the conveyor belts of the transport system and the horticultural products are moved over the roller track and supported by the roller track by driving the at least one endless conveyor belt. The plant containers and/or substrate containers can, for example, be trays or crates containing several plants, plant pots, etc.

The present invention will be explained with reference to two diagrammatic figures to be discussed below. In these figures:
Figure 1 shows a perspective view of the transport system according to the invention;
Figure 2 shows a diagrammatic side view of the transport system according to the invention.

Identical reference numbers refer to identical components in both figures.

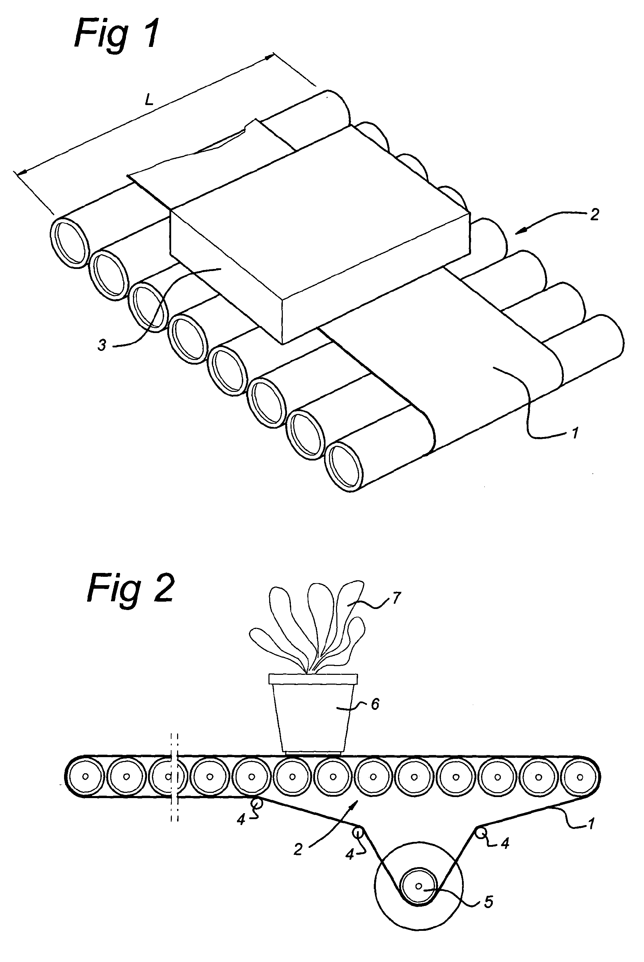

In Figure 1 a conveyor belt 1 runs over a roller track 2. This belt can also be a band or a girdle. Any arbitrary standard roller track can be used for the roller track 2, in which context it is important that the peripheral surfaces of rollers located next to one another (just) don't touch one another. Furthermore, Figure 1 shows that there is a rectangular product 3 on the conveyor belt 1, the width of the conveyor belt 1 being less than the corresponding width of the product 3. As a result, products of various dimensions can be transported. In this context it is important that the bottom of product 3 has adequate grip on the conveyor belt at the point of engagement with the conveyor belt 1. Depending on the specific embodiment of the sides of the roller track 2, it is even conceivable that the corresponding width of the product 3 is greater than the axial length of the rollers of the roller track 2.

The effective axial length L of the rollers of the roller track is determined by the length of the peripheral surface of the rollers. Any longer protruding shafts of the rollers or drive rollers coupled thereto (not shown in Figure 1) are therefore not included in this effective length.

Figure 2 shows, diagrammatically, the drive system of the conveyor belt 1 which engages on the lower part of the conveyor belt. The combination of tensioning rollers 4 and a drive roller 5 provides the drive for conveyor belt 1. In most cases the drive roller 5 will be driven by a standard electric motor. The tensioning rollers 4 are optionally provided with means for displacing these over a certain distance, the shafts of the two tensioning rollers 4 and the drive roller 5 remaining essentially parallel to one another. As a result, the tension in the conveyor belt can optionally be varied.

In Figure 2 a plant pot 6 provided with a plant 7 has been placed on conveyor belt 1. Transport of such products can advantageously be employed if the diameter of the bottom of the plant pot 6 is greater than the width of the conveyor belt 1. Plant pots are generally provided on the bottom with means that enable a good grip on the conveyor belts.

A drive system according to NL 1 021 196 in the name of the Applicant, which is called a drive/tensioning system in NL 1 021 196, can very readily be used for the drive system as shown diagrammatically in Figure 2. A major advantage is then that the belt is automatically tensioned when the transport system according to the present application is switched on. The tensioning system can, moreover, act in both directions of transport.

The transport system according to the invention can in particular advantageously be used where roller conveyors transporting over a slope are conventionally used or where it would be desired to use these. This is frequently the case in horticulture. In this case the conveyor belt ensures that the items are reliably transported upwards (or optionally downwards) along the slope.

## Claims

1. Transport system comprising:
• a roller conveyor (2) having a multiplicity of rollers located alongside one another, determining a transport surface;
• an endless belt (1), the upper part of which rests on the roller conveyor (2) and the lower part of which runs below the roller conveyor (2);
• a drive for driving the endless belt (1)
wherein the width of the belt (1) is less than the effective axial length (L) of the rollers of the roller conveyor,
**characterised in that**
the endless belt is a conveyor belt (1) that, protruding above the rollers, rests freely on the transport surface of the roller conveyor (2) and
**in that** the roller conveyor is so constructed that the rollers and conveyor belt jointly transport loads resting thereon.

2. Transport system according to Claim 1, **characterised in that** the drive engages on the lower part of the conveyor belt (1).

3. Transport system according to one of the preceding claims, **characterised in that** the width of the conveyor belt (1) is less than 50 % of the effective axial length (L) of the rollers of the roller track (2).

4. Transport system according to one of the preceding claims, **characterised in that** the width of the conveyor belt (1) is less than 25 % of the effective axial length (L) of the rollers of the roller track, in particular is less than 10 % of the effective axial length (L) of the rollers of the roller track (2).

5. Transport system according to one of the preceding claims, **characterised in that** two conveyor belts (1) are provided.

6. Transport system according to one of the preceding claims, **characterised in that** the roller conveyor (2) has a closed transport surface of non-touching rollers located alongside one another.

7. Transport system according to one of the preceding claims, wherein the upper part of the conveyor belt is in frictional contact with the transport surface of the roller conveyor.

8. Horticultural building, such as a horticultural greenhouse, provided with a transport system according to one of the preceding claims.

9. Method for transporting plants and/or substrate containers, wherein the plants and/or plant containers and/or substrate containers are placed on the at least one conveyor belt (1) and the rollers of the transport system according to one of the preceding Claims 1 - 7 and wherein the plants and/or plant containers and/or substrate containers are moved over the roller track (2) and supported by the roller track by driving the at least one endless conveyor belt (1).
